# EUROPEAN PATENT SPECIFICATION

(11) **EP 4 363 621 B1**
(45) Date of publication and mention of the grant of the patent: **28.10.2026**
(21) Application number: 22744823.0
(22) Date of filing: 27.06.2022
(51) Int. Cl.: C21B 3/06, C22B 5/04, C22B 7/04, C21C 7/06

(54) **PROCESS FOR TREATING AND VALORIZING LADLE FURNACE SLAG**
VERFAHREN ZUR BEHANDLUNG UND VERWERTUNG VON SCHLACKEN AUS PFANNENÖFEN
PROCÉDÉ DE TRAITEMENT ET DE VALORISATION DE SCORIES DE FOUR-POCHE

(30) Priority: 29.06.2021 IT 202100016988
(43) Date of publication of application: 08.05.2024
(73) Proprietor: ITALGHISA SRL a socio unico, 25021 Bagnolo Mella (BS) (IT)
(72) Inventor: DUSI, Maurizio, 25021 Bagnolo Mella, Brescia (IT)
(74) Representative: Meroni, Francesca
(86) International application number: PCT/IB2022/055951
(87) International publication number: WO 2023/275714

(56) References cited:
- GB-A- 2 205 634
- US-A- 5 421 857
- US-A- 5 626 646

## Description

### Field of the invention

The present invention relates to a process for treating and valorizing the ladle furnace slag deriving from the refining of steel inside a ladle.

### Background art

In addition to the primary product, i.e. steel, the steel production process generates other materials such as slags, which can be classified in four main categories: blast furnace slag, converter slag, electric arc furnace slag and secondary metallurgy slag.

The secondary metallurgy slag, also known as white slag or ladle furnace slag, comes from the steel refining step outside furnace, which takes place inside the ladle.

The ladle furnace slag fundamentally differs from the other types of slag due to its chemical composition and, in particular, the low content of iron oxides and the high content of calcium oxide. Due to its chemical-physical characteristics and the fact that its treatment generates significant amounts of dusts, the ladle furnace slag is difficult to recycle and, therefore, it is mainly disposed of in landfill as waste. On the contrary, processes are known for recycling blast furnace slag, converter slag and electric arc furnace slag, mainly in the field of building and road constructions.

Some approaches for managing, but not for valorizing, the ladle furnace slag involve granulation processes in water or air, described for example in Zhao, J.; Wang, Y.; Fang, K.; Zheng, Y. & Wang, D. "The Characteristics of the Phase Transition of Air-Quenched Ladle Furnace Slag", JOM (2020), and in Kriskova, L. et al. "Effect of High Cooling Rates on the Mineralogy and Hydraulic Properties of Stainless Steel Slags", Metall. Mater. Trans. B 44, 1-12 (2013).

US 5 421 857 A discloses a process for the treatment of a raw material resulting from magnetic separation of sulphide ores comprising FeS₂ (14% by mass), Fe₂O₃ (19% by mass), SiO₂ (30% by mass), Al₂O₃ (20% by mass), CaO (11% by mass), MgO (5% by mass).

The fact that the ladle furnace slag is mainly handled as waste and sent to landfill represents a serious problem considering the huge amounts of ladle furnace slag generated, up to 5% by weight of the steel produced every year. This problem is even more strongly perceived in light of the increasingly stringent regulations on waste management and the increasing cost associated with the disposal thereof, and in the increasingly current perspective of creating a sustainable development model based on reducing the consumption of natural resources and minimizing the production of waste, in which the residues deriving from industrial processes can be reused rather than disposed of.

Therefore, the problem underlying the present invention is to develop a process for treating the ladle furnace slag which enables this steel residue to be valorized and reused and, at the same time, the production of waste to be sent to landfill to be minimized or eliminated.

### Summary of the invention

The problem presented above is solved by a process for treating the ladle furnace slag as outlined in the accompanying claims, the definitions of which form an integral part of the present description.

The present invention relates to a process for treating ladle furnace slag ("white slag") deriving from the refining of steel (so-called secondary metallurgy) inside a ladle, said process being disclosed in appended claims 1-12.

The process according to the present invention enables the ladle furnace slag to be entirely converted directly inside the ladle in which it is generated into two materials with high technical and economic value, specifically ferrosilicon alloys and calcium aluminate, without generating byproducts or waste to be sent to landfill.

Therefore, the process according to the present invention enables to valorize and reuse a product (the ladle furnace slag) which would otherwise be disposed of as waste, generating materials (the ferrosilicon alloy and the calcium aluminate) provided with a true dignity and product qualification. Advantageously, the ferrosilicon alloy and the calcium aluminate can for example be used in the process from which they were generated, i.e. as raw materials in the steel production process.

Such process is therefore extremely advantageous, as it significantly reduces the annual volumes and costs of disposal of the ladle furnace slag until they are completely eliminated in the perspective of a total circular economy, and as it does not create any additional waste (so-called "total zero waste" process).

Further features and advantages of the invention will be more apparent from the description of some embodiments, given here by way of non-limiting example.

### Detailed description of the invention

The object of the present invention is a process for treating and valorizing the ladle furnace slag inside the ladle in which it is produced during the steel refining step, by adding metallic aluminum to a mixture of ladle furnace slag and steel.

It has surprisingly been found that during such process the mixture of ladle furnace slag and steel is entirely converted to provide, as the sole reaction products, a ferrosilicon alloy and calcium aluminate, which can be reused in the steel production process or as raw materials in other processes.

It has also been surprisingly found that the reaction mixture remains in the molten state throughout the entire process of the present invention, which is therefore self-sustaining. Therefore, advantageously, there is no need to add fluxes or other additives to the reaction mixture and no need to provide energy from outside. Without being bound by theory, it is believed that a balance is created within the mixture between the oxides present (e.g. magnesium oxide, calcium oxide and aluminum oxide) such that the melting point of the mixture is not raised and, thus, the reaction mixture remains in the liquid state for the entire duration of the process. Advantageously, it follows that in the process according to the present invention no fluxes or further additions are added from the outside.

As already mentioned above, the mixture comprising ladle furnace slag and steel which is subjected to the process according to the present invention is at a temperature comprised between 1400°C and 1700°C, preferably at a temperature comprised between 1500°C and 1650°C, for example at a temperature of about 1500°C or about 1600°C.

Preferably, said mixture consists of ladle furnace slag and steel. For the purposes of the present invention, the term "comprising" also includes the meaning of "consisting of" or "essentially consisting of".

Said mixture comprises steel in an amount comprised between 25% and 35% by weight, preferably comprised between 28% and 32% by weight, for example comprised between 28% and 30%, and ladle furnace slag in an amount comprised between 65% and 75% by weight, preferably comprised between 68% and 72% by weight, for example comprised between 70% and 72% by weight, or comprised between 71% and 72% by weight.

Steel is to be intended as a ferrous alloy comprising iron and carbon, in which carbon is generally present in an amount not greater than about 2.1% by weight, preferably not greater than about 1% by weight.

Preferably, the ladle furnace slag comprises silica (SiO₂) in an amount not greater than 45% by weight, or not greater than 40% by weight. In a preferred embodiment, the ladle furnace slag comprises silica (SiO₂) in a variable amount from 2% to 35% by weight, for example between 10% and 30% by weight, or between 15% and 25% by weight.

According to an embodiment, the ladle furnace slag comprises silica (SiO₂), calcium oxide (CaO), magnesium oxide (MgO) and alumina (Al₂O₃).

According to an embodiment, the ladle furnace slag comprises calcium oxide (CaO) in an amount comprised between 30 and 60% by weight, for example comprised between 40% and 55% by weight, or comprised between 45% and 50% by weight.

According to an embodiment, the ladle furnace slag comprises magnesium oxide (MgO) in an amount comprised between 1% and 13% by weight, for example comprised between 2% and 10% by weight, or comprised between 4% and 6% by weight.

According to an embodiment, the ladle furnace slag comprises alumina (Al₂O₃) in an amount comprised between 4% and 36% by weight, for example comprised between 10% and 30% by weight, or comprised between 15% and 20% by weight.

Preferably, the ladle furnace slag comprises silica (SiO₂), calcium oxide (CaO), magnesium oxide (MgO) and alumina (Al₂O₃) in the aforesaid amounts.

Optionally, said ladle furnace slag comprises:
iron oxides (FeOₓ) in an amount up to 15% by weight and/or manganese oxide (MnO) in an amount up to 5% by weight and/or
chromium trioxide (Cr₂O₃) in an amount up to 3% by weight, and/or
sulfur trioxide (SO₃) in an amount up to 4% by weight.

In the present description, the term "optionally" denotes that the components to which it refers may be present or not. Therefore, the term "optionally" denotes that the components to which it refers are present in the reference composition in an amount that ranges from 0% by weight to a maximum limit indicated each time.

Without being bound by theory, during the process according to the present invention, the metallic aluminum added during the aforementioned step a) reduces the silica (SiO₂) contained in the ladle furnace slag to silicon by oxidizing to alumina (Al₂O₃), according to the following reaction: 3 SiO₂ + 4 Al → 2 Al₂O₃ + 3 Si. The reaction of reduction is advantageously triggered at the temperature at which the mixture comprising ladle furnace slag and steel is inside the ladle.

Without being bound by theory, during the process according to the present invention, the reduction of any metal oxides contained in the ladle furnace slag, for example manganese and chromium oxides, is also triggered. Therefore, this process enables a perfect "cleaning" of the ladle furnace slag to be performed by seizing all the metals present in the ladle furnace slag and transferring them into the ferrosilicon alloy.

During said step a), the metallic aluminum is added to the mixture comprising ladle furnace slag and steel in such an amount as to react with at least 75%, preferably at least 80% or at least 85% or at least 90% of the silica contained in the ladle furnace slag. In a preferred embodiment, the metallic aluminum is added to the mixture comprising ladle furnace slag and steel in such an amount as to react with at least 95% of the silica contained in the ladle furnace slag, even more preferably with all or substantially all of the silica contained in the ladle furnace slag. The expression "substantially all" means at least 98% or 99% of the silica contained in the ladle furnace slag.

In an embodiment of the present invention, the metallic aluminum is added to the mixture comprising ladle furnace slag and steel in such an amount that the weight ratio between the metallic aluminum and the silica contained in the ladle furnace slag is at least 0.6:1. In an embodiment of the present invention, the metallic aluminum is added to the mixture comprising ladle furnace slag and steel in such an amount that the weight ratio between the metallic aluminum and the silica is comprised between 0.6:1 and 0.7:1, preferably between 0.6:1 and 0.65:1, for example between 0.6:1 and 0.64:1, or between 0.6:1 and 0.63:1, or between 0.6:1 and 0.62:1, or between 0.6:1 and 0.61:1.

In a preferred embodiment, said mixture comprising ladle furnace slag and steel is in the molten state. Alternatively, said mixture may also be in the semi-molten state.

According to a first embodiment, the metallic aluminum is added during step a) in the form of metallic aluminum in the pure state, for example in the form of granules having a particle size preferably comprised between 2 and 20 mm, preferably of about 10 mm.

According to a second embodiment, the metallic aluminum is added during step a) in the form of aluminum scrap comprising a variable amount of metallic aluminum and, preferably, a variable amount of alumina (Al₂O₃). According to an embodiment, the scrap comprises at least 70% by weight of metallic aluminum, for example at least 80% by weight. According to an embodiment, the scrap further comprises alumina (Al₂O₃) in an amount preferably not greater than 30% by weight, for example not greater than 20% by weight. The aluminum scrap may further contain other metals, also including iron, in a total amount preferably not greater than 5% by weight, more preferably not greater than 1% by weight.

Advantageously, the metallic aluminum added to the mixture comprising ladle furnace slag and steel melts during step a) thanks to the latent heat of fusion of said mixture inside the ladle, which is at high temperatures comprised between 1400°C and 1700°C.

During step b) of the process according to the present invention, the mixture comprising ladle furnace slag and steel to which the metallic aluminum was added is appropriately mixed, thus obtaining a ferrosilicon alloy and calcium aluminate.

In a preferred embodiment, during the aforesaid step b) an inductive electromagnetic field is applied. Advantageously, said inductive electromagnetic field imparts a rotary motion to the aforesaid mixture promoting heat exchange and optimizing the kinetics of the process. It has also been surprisingly found that the application of the inductive electromagnetic field also promotes the separation of the ferrosilicon alloy from the calcium aluminate during the subsequent step c).

The ladle has the form of a large bucket and consists of a casing of strong sheet metal internally coated with refractory material. In the aforesaid embodiment in which an inductive electromagnetic field is applied, coils are advantageously inserted between said sheet metal casing and said internal coating made of refractory material such as to generate said electromagnetic field.

In a specific embodiment, said internal coating of the ladle is made of calcium aluminate having the same composition or a similar composition to the calcium aluminate produced with the process according to the present invention. In this embodiment, advantageously, said coating is practically never consumed as it is constantly reformed, since it is made of the same material that is produced by the process of the invention.

As an alternative to mixing by induction of an electromagnetic field, during said step b) the ladle can also be shaken, i.e. "tilted", in order to stir the reaction mixture inside it.

During step c) of the process according to the present invention, the ferrosilicon alloy and the calcium aluminate obtained are separated. Advantageously, due to the different density, the ferrosilicon alloy settles on the bottom of the ladle below the calcium aluminate.

In an embodiment, the ladle has two drains, a first drain for extracting the ferrosilicon alloy and a second drain for extracting the calcium aluminate. The first drain for extracting the ferrosilicon alloy is placed below the second drain for extracting the calcium aluminate. For example, the first drain for extracting the ferrosilicon alloy is placed on the bottom of the ladle and the second drain for extracting the calcium aluminate is placed on one side of the ladle.

In an alternative embodiment, the ladle has only one drain for extracting the ferrosilicon alloy, for example placed on the bottom of the ladle. In this embodiment, the calcium aluminate is extracted from the upper edge of the ladle, for example by tilting the ladle so as to discharge the calcium aluminate deposited above the ferrosilicon alloy.

Advantageously, the ferrosilicon alloy and the calcium aluminate are extracted in the molten state.

According to preferred embodiments, the process of the invention generates the ferrosilicon alloy 15 (FeSi15) or the ferrosilicon alloy 25 (FeSi25), as defined in the UNI ISO 5445 standard, i.e. ferrosilicon alloys having the compositions listed in Table 1. Said alloys comprise an amount of iron preferably comprised between 65% and 85% by weight, preferably between 74% and 78% by weight, for example of about 75% by weight.

**Table 1**

| | Chemical composition % | | | | | | | | | |
|---|---|---|---|---|---|---|---|---|---|---|
| | Si | | Al | | P max | S max | C max | Mn max | Cr max | Ti max |
| | more than | up to | more than | up to | | | | | | |
| FeSi15 | 14.0 | 20.0 | - | 1.0 | 0.15 | 0.06 | 1.5 | 1.5 | 0.8 | 0.30 |
| FeSi25 | 20.0 | 30.0 | - | 1.5 | 0.15 | 0.06 | 1.0 | 1.0 | 0.8 | 0.30 |

According to a preferred embodiment, the process of the invention generates calcium aluminate comprising: calcium oxide (CaO) in an amount from 28% to 60% by weight, for example from 35% to 50% by weight or from 40% to 45% by weight; aluminum oxide (Al₂O₃) in an amount from 40% to 70% by weight, for example from 45% to 60% by weight or from 50% to 55% by weight; optionally, magnesium oxide (MgO) in an amount not greater than 12% by weight, or not greater than 9% by weight, for example from 1% to 3%.

Optionally, said calcium aluminate comprises silica (SiO₂) in an amount up to 10% by weight, preferably not greater than 5% by weight, more preferably not greater than 4%, or not greater than 3%, or not greater than 2%, or not greater than 1% by weight. Optionally, said calcium aluminate comprises sulfur trioxide and/or iron oxides in a total amount not greater than 5% by weight, preferably not greater than 4% by weight, or not greater than 3%, or not greater than 2%, or not greater than 1% by weight. According to a preferred embodiment, said calcium aluminate does not comprise silica (SiO₂). According to a preferred embodiment, said calcium aluminate does not comprise sulfur trioxide and/or iron oxides.

According to an embodiment, from the process according to the present invention, an amount of calcium aluminate comprised between 55% and 70% by weight, for example between 55% and 65% by weight, and an amount of ferrosilicon alloy comprised between 30% and 45% by weight, for example between 35% and 45% by weight, are obtained. These percentage amounts are calculated with respect to the total weight of the reaction products (i.e. calcium aluminate and ferrosilicon alloy).

Preferably, the process according to the present invention is performed immediately downstream of the step of casting the steel obtained from the secondary metallurgy process, during which the steel is poured from the ladle preferably into a holding furnace for lamination. Once said step of casting the steel took place, the ladle furnace slag and the residual steel, i.e. the aforesaid mixture comprising ladle furnace slag and steel, remains inside the ladle. Therefore, the term "immediately" denotes that the process according to the present invention follows the step of casting the steel without any other steps in between.

Preferably, the process according to the present invention is performed on each batch of the steel refining process downstream of the step of casting the steel. In a preferred embodiment, downstream of the aforesaid step of casting the steel, the ladle contains a mixture consisting of about 2000 kg of ladle furnace slag and an amount comprised between 750 kg and 900 kg of residual steel.

In addition to the advantages mentioned above, the process according to the present invention enables to customize the output products, i.e. to modulate the composition thereof, by varying the initial compositions of the ladle furnace slag and/or the steel, as well as by varying the form in which the metallic aluminum is added. It follows that said process enables ferrosilicon alloys and calcium aluminate to be obtained with variable compositions based on the requirements and the uses for which they are intended.

Furthermore, the process of the present invention is carbon-free, not generating carbon oxides, unlike known processes which use carbon as a reducing agent. Therefore, also for this reason, the process of the present invention reduces the environmental impact both inside the production site and in the local area.

### Examples

The process according to the present invention was reproduced on a laboratory scale starting from a mixture of ladle furnace slag and steel, by adding metallic aluminum as a reactant, thus obtaining calcium aluminate and ferrosilicon alloy.

3 examples are reported herein below in which the composition of the starting mixture and the composition of the ladle furnace slag vary, thus obtaining calcium aluminate and ferrosilicon alloy of different compositions.

### Example 1

| INPUT | | | grams | |
|---|---|---|---|---|
| 70.8% | ladle furnace slag | CaO | 484 | 1000 |
| | | MgO | 47 | |
| | | Al₂O₃ | 257 | |
| | | SiO₂ | 212 | |
| 29.2% | steel | | 412 | |
| | aluminum | | 129 | |

| OUTPUT | | | % by weight | grams |
|---|---|---|---|---|
| 66.7% | calcium aluminate | MgO | 4.52 | 1027.3 |
| | | CaO | 46.85 | |
| | | Al₂O₃ | 47.77 | |
| | | SiO₂ | 0.86 | |
| 33.3% | FeSi15 | Fe | 80.19 | 513.7 |
| | | Si | 18.95 | |
| | | Al | 0.86 | |

### Example 2

| INPUT | | | grams | |
|---|---|---|---|---|
| 65.1% | ladle furnace slag | CaO | 444 | 1000 |
| | | MgO | 71 | |
| | | Al₂O₃ | 106 | |
| | | SiO₂ | 362 | |
| | | FeOₓ | 17 | |
| 34.9% | steel | | 537 | |
| | aluminum | | 220 | |

| OUTPUT | | | % by weight | grams |
|---|---|---|---|---|
| 58.9% | calcium aluminate | MgO | 6.81 | 1035.7 |
| | | CaO | 42.83 | |
| | | Al₂O₃ | 48.47 | |
| | | SiO₂ | 1.89 | |
| 41.1% | FeSi25 | Fe | 76.76 | 721.3 |
| | | Si | 22.55 | |
| | | Al | 0.69 | |

### Example 3

| INPUT | | | grams | |
|---|---|---|---|---|
| 73.5% | ladle furnace slag | CaO | 400 | 1000 |
| | | MgO | 94 | |
| | | Al₂O₃ | 212 | |
| | | SiO₂ | 267 | |
| | | FeOₓ | 20 | |
| 26.5% | steel | | 360 | |
| | aluminum | | 170 | |

| OUTPUT | | | % by weight | grams |
|---|---|---|---|---|
| 66.9% | calcium aluminate | MgO | 8.66 | 1023.5 |
| | | CaO | 39.52 | |
| | | Al₂O₃ | 51.73 | |
| | | SiO₂ | 0.09 | |
| 33.1% | FeSi25 | Fe | 74.18 | 506.5 |
| | | Si | 24.36 | |
| | | Al | 1.46 | |

It is apparent that only one particular embodiment of the present invention has been described. Those skilled in the art will be able to make all the necessary modifications to the process for the adaptation thereof to particular conditions, without however departing from the scope of protection as defined in the appended claims.

## Claims

1. A process for treating ladle furnace slag, white slag, deriving from the refining of steel, so-called secondary metallurgy, inside a ladle, said process comprising the following steps:
a) adding metallic aluminum to a mixture comprising ladle furnace slag and steel inside said ladle, said mixture being at a temperature comprised between 1400°C and 1700°C, preferably about 1500°C, and said mixture comprising steel in an amount comprised between 25% and 35% by weight and ladle furnace slag in an amount comprised between 65% and 75% by weight;
b) mixing the mixture obtained during step a) inside said ladle, obtaining a ferrosilicon alloy and calcium aluminate;
c) separating the ferrosilicon alloy and the calcium aluminate thus obtained,
wherein the ladle furnace slag comprises silica (SiO₂) in a variable amount from 2% to 35% by weight; calcium oxide (CaO) in an amount comprised between 30 and 60% by weight; magnesium oxide (MgO) in an amount comprised between 1% and 13% by weight; alumina (Al₂O₃) in an amount comprised between 4% and 36% by weight; iron oxides in an amount up to 15% by weight, and
wherein during said step a) the metallic aluminum is added in such an amount as to react with at least 75% of the silica contained in the ladle furnace slag.

2. A process according to claim 1, wherein said mixture comprising ladle furnace slag and steel comprises steel in an amount comprised between 28% and 32% by weight and ladle furnace slag in an amount comprised between 68% and 72% by weight.

3. A process according to claim 1 or 2, wherein said mixture comprising ladle furnace slag and steel is in the molten state.

4. A process according to any one of the preceding claims, wherein during step a) the metallic aluminum is added in such an amount as to react with at least 95% of the silica contained in the ladle furnace slag, preferably with all or substantially all of the silica contained in the ladle furnace slag.

5. A process according to any one of the preceding claims, wherein during step a) the metallic aluminum is added in such an amount that the weight ratio between the metallic aluminum and the silica contained in the ladle furnace slag is at least 0.6:1, preferably comprised between 0.6:1 and 0.7:1.

6. A process according to any one of the preceding claims, wherein the metallic aluminum is added during step a) in the form of metallic aluminum in the pure state, preferably in the form of granules.

7. A process according to any one of claims 1 to 5, wherein the metallic aluminum is added during step a) in the form of aluminum scrap comprising a variable amount of metallic aluminum and, preferably, a variable amount of alumina (Al₂O₃).

8. A process according to any one of the preceding claims, wherein during step b) an inductive electromagnetic field is applied.

9. A process according to any one of the preceding claims, wherein during step c) the ferrosilicon alloy settles on the bottom of the ladle below the calcium aluminate, the ferrosilicon alloy is extracted through a first drain and the calcium aluminate is optionally extracted through a second drain, said first drain being placed underneath said second drain.

10. A process according to any one of the preceding claims, being performed immediately downstream of the step of casting the steel obtained from the secondary metallurgy process from the ladle, from which said mixture comprising ladle furnace slag and residual steel is obtained.

11. A process according to any one of the preceding claims, wherein ferrosilicon alloy 15 (FeSi15) or ferrosilicon alloy 25 (FeSi25) is obtained.

12. A process according to any one of the preceding claims, wherein the calcium aluminate comprises: calcium oxide (CaO) in an amount from 28% to 60% by weight, aluminum oxide (Al₂O₃) in an amount from 40% to 70% by weight, optionally magnesium oxide (MgO) in an amount not greater than 12% by weight.

## Patentansprüche

1. Ein Verfahren zur Behandlung von Pfannenofenschlacke, weißer Schlacke, die bei der Stahlraffination, der sogenannten Sekundärmetallurgie, in einer Pfanne anfällt, wobei das besagte Verfahren die folgenden Schritte umfasst:
a) Zugabe von metallischem Aluminium zu einer Mischung, welche Pfannenofenschlacke und Stahl umfasst, in der besagten Pfanne, wobei die Temperatur der besagten Mischung zwischen 1400 °C und 1700 °C, vorzugsweise etwa 1500 °C, liegt, und wobei in der besagten Mischung der Anteil an Stahl zwischen 25 und 35 Gew.-% und der Anteil an Pfannenofenschlacke zwischen 65 und 75 Gew.-% beträgt;
b) Mischen der in Schritt a) erhaltenen Mischung in der besagten Pfanne, wodurch eine Ferrosiliciumlegierung und Calciumaluminat erhalten werden;
c) Trennung der so erhaltenen Ferrosiliciumlegierung und des Calciumaluminats,
wobei die Pfannenofenschlacke Siliciumdioxid (SiO₂) in einer variablen Menge von 2 bis 35 Gew.-%, Calciumoxid (CaO) in einer Menge zwischen 30 und 60 Gew.-%, Magnesiumoxid (MgO) in einer Menge zwischen 1 und 13 Gew.-%, Aluminiumoxid (Al₂O₃) in einer Menge zwischen 4 und 36 Gew.-%, Eisenoxide in einer Menge von bis zu 15 Gew.-% enthält, und
wobei während des besagten Schrittes a) metallisches Aluminium in einer solchen Menge zugegeben wird, dass es mit mindestens 75 % des in der Pfannenofenschlacke enthaltenen Siliciumdioxids reagiert.

2. Verfahren nach Anspruch 1, wobei die besagte Mischung, welche Pfannenofenschlacke und Stahl umfasst, Stahl in einer Menge zwischen 28 und 32 Gew.-% und Pfannenofenschlacke in einer Menge zwischen 68 und 72 Gew.-% enthält.

3. Verfahren nach Anspruch 1 oder 2, wobei die besagte Mischung, welche Pfannenofenschlacke und Stahl umfasst, im geschmolzenen Zustand befindet.

4. Verfahren nach jeglichem der vorhergehenden Ansprüche, wobei während Schritt a) metallisches Aluminium in einer solchen Menge zugegeben wird, dass es mit mindestens 95 % des in der Pfannenofenschlacke enthaltenen Siliciumdioxids, vorzugsweise mit dem gesamten oder im Wesentlichen dem gesamten in der Pfannenofenschlacke enthaltenen Siliciumdioxid, reagiert.

5. Verfahren nach jeglichem der vorhergehenden Ansprüche, wobei während Schritt a) metallisches Aluminium in einer solchen Menge zugegeben wird, dass das Gewichtsverhältnis zwischen dem metallischen Aluminium und dem in der Pfannenofenschlacke enthaltenen Siliciumdioxid mindestens 0,6:1 beträgt, vorzugsweise zwischen 0,6:1 und 0,7:1.

6. Verfahren nach jeglichem der vorhergehenden Ansprüche, wobei das metallische Aluminium während Schritt a) in Form von metallischem Aluminium im reinen Zustand, vorzugsweise in Form von Granulat, zugegeben wird.

7. Verfahren nach jeglichem der Ansprüche 1 bis 5, wobei das metallische Aluminium während Schritt a) in Form von Aluminiumschrott zugegeben wird, der eine variable Menge an metallischem Aluminium und vorzugsweise eine variable Menge an Aluminiumoxid (Al₂O₃) enthält.

8. Verfahren nach jeglichem der vorhergehenden Ansprüche, wobei während Schritt b) ein induktives elektromagnetisches Feld angelegt wird.

9. Verfahren nach jeglichem der vorhergehenden Ansprüche, wobei sich während Schritt c) die Ferrosiliciumlegierung am Boden der Pfanne unterhalb des Calciumaluminats absetzt, die Ferrosiliciumlegierung durch einen ersten Abfluss entnommen wird und das Calciumaluminat gegebenenfalls durch einen zweiten Abfluss entnommen wird, wobei der besagte erste Abfluss unterhalb des besagten zweiten Abflusses angeordnet ist.

10. Verfahren nach jeglichem der vorhergehenden Ansprüche, das unmittelbar nach dem Gießschritt des aus dem sekundären metallurgischen Prozess gewonnenen Stahls aus der Pfanne durchgeführt wird, aus welcher die besagte Mischung, welche Pfannenofenschlacke und Reststahl umfasst, gewonnen wird.

11. Verfahren nach jeglichem der vorhergehenden Ansprüche, wobei eine Ferrosiliciumlegierung 15 (FeSi15) oder eine Ferrosiliciumlegierung 25 (FeSi25) erhalten wird.

12. Verfahren nach jeglichem der vorhergehenden Ansprüche, wobei das Calciumaluminat Folgendes umfasst: Calciumoxid (CaO) in einer Menge von 28 bis 60 Gew.-%, Aluminiumoxid (Al₂O₃) in einer Menge von 40 bis 70 Gew.-%, gegebenenfalls Magnesiumoxid (MgO) in einer Menge von höchstens 12 Gew.-%.

## Revendications

1. Procédé de traitement de laitier de four-poche, laitier blanc, issu de l'affinage de l'acier, dit métallurgie secondaire, à l'intérieur d'une poche, ledit procédé comprenant les étapes suivantes :
a) ajouter de l'aluminium métallique à un mélange comprenant du laitier de four-poche et de l'acier à l'intérieur de ladite poche, ledit mélange étant à une température comprise entre 1400 °C et 1700 °C, de préférence environ 1500 °C, et ledit mélange comprenant de l'acier en une quantité comprise entre 25% et 35% en poids et du laitier de four-poche en une quantité comprise entre 65% et 75% en poids ;
b) mélanger le mélange obtenu au cours de l'étape a) à l'intérieur de ladite poche, en obtenant un alliage de ferrosilicium et d'aluminate de calcium ;
c) séparer l'alliage de ferrosilicium et l'aluminate de calcium ainsi obtenus,
dans lequel le laitier de four en poche comprend de la silice (SiO2) en une quantité variable de₂% à 35 % en poids ; de l'oxyde de calcium (CaO) en une quantité comprise entre 30 et 60 % en poids ; de l'oxyde de magnésium (MgO) en une quantité comprise entre 1 % et 13 % en poids ; de l'alumine (_{Al2O3}) en une quantité comprise entre 4 % et 36 % en poids ; des oxydes de fer en une quantité allant jusqu'à 15 % en poids, et
dans lequel, au cours de ladite étape a), l'aluminium métallique est ajouté en une quantité telle qu'il réagit avec au moins 75 % de la silice contenue dans le laitier du four de poche.

2. Procédé selon la revendication 1, dans lequel ledit mélange comprenant du laitier de four en poche et de l'acier comprend de l'acier en une quantité comprise entre 28 % et 32 % en poids et du laitier de four en poche en une quantité comprise entre 68 % et 72 % en poids.

3. Procédé selon la revendication 1 ou 2, dans lequel ledit mélange comprenant du laitier de four en poche et de l'acier est à l'état fondu.

4. Procédé selon l'une quelconque des revendications précédentes, dans lequel, au cours de l'étape a), l'aluminium métallique est ajouté en une quantité telle qu'il réagisse avec au moins 95 % de la silice contenue dans le laitier du four à poche, de préférence avec la totalité ou sensiblement la totalité de la silice contenue dans le laitier du four à poche.

5. Procédé selon l'une quelconque des revendications précédentes, dans lequel au cours de l'étape a), l'aluminium métallique est ajouté en une quantité telle que le rapport pondéral entre l'aluminium métallique et la silice contenue dans le laitier du four de poche est d'au moins 0,6:1, de préférence compris entre 0,6:1 et 0,7:1.

6. Procédé selon l'une quelconque des revendications précédentes, dans lequel l'aluminium métallique est ajouté au cours de l'étape a) sous forme d'aluminium métallique à l'état pur, de préférence sous forme de granulés.

7. Procédé selon l'une quelconque des revendications 1 à 5, dans lequel l'aluminium métallique est ajouté au cours de l'étape a) sous la forme de déchets d'aluminium comprenant une quantité variable d'aluminium métallique et, de préférence, une quantité variable d'alumine (Al₂O₃).

8. Procédé selon l'une quelconque des revendications précédentes, dans lequel au cours de l'étape b) un champ électromagnétique inductif est appliqué.

9. Procédé selon l'une quelconque des revendications précédentes, dans lequel au cours de l'étape c), l'alliage de ferrosilicium s'accumule au fond de la poche sous l'aluminate de calcium, l'alliage de ferrosilicium est extrait par un premier drain et l'aluminate de calcium est éventuellement extrait par un deuxième drain, ledit premier drain étant placé sous ledit deuxième drain.

10. Procédé selon l'une quelconque des revendications précédentes, étant effectué immédiatement en aval de l'étape de coulée de l'acier obtenu à partir du procédé de métallurgie secondaire à partir de la poche, à partir duquel ledit mélange comprenant du laitier de four-poche et de l'acier résiduel est obtenu.

11. Procédé selon l'une quelconque des revendications précédentes, dans lequel l'alliage de ferrosilicium 15 (FeSi15) ou l'alliage de ferrosilicium 25 (FeSi25) est obtenu.

12. Procédé selon l'une quelconque des revendications précédentes, dans lequel l'aluminate de calcium comprend : de l'oxyde de calcium (CaO) en une quantité de 28 % à 60 % en poids, de l'oxyde d'aluminium (Al₂O₃) en une quantité de 40 % à 70 % en poids, éventuellement de l'oxyde de magnésium (MgO) en une quantité ne dépassant pas 12 % en poids.
